**Europäisches Patentamt**

**European Patent Office**

**Office européen des brevets**

(19)

(11) Numéro de publication : **0 555 142 A1**

## (12) DEMANDE DE BREVET EUROPEEN

(21) Numéro de dépôt : **93400259.3**

(22) Date de dépôt : **02.02.93**

(51) Int. Cl.⁵ : **B32B 15/01, C22C 38/24**

(30) Priorité : **04.02.92 FR 9201233**

(43) Date de publication de la demande :
**11.08.93 Bulletin 93/32**

(84) Etats contractants désignés :
**AT BE DE ES FR GB GR IT LU NL SE**

(71) Demandeur : **CHAVANNE-KETIN**
**La Défense 9, 4, place de la Pyramide**
**F-92800 Puteaux (FR)**

(72) Inventeur : **Werquin, Jean-Claude**
**342 Avenue Jean Jaurés**
**F-59790 Ronchin (FR)**
Inventeur : **Bocquet, Jacques**
**1 bis Avenue de Ferrière**
**F-59600 Maubauge (FR)**

(74) Mandataire : **Moncheny, Michel et al**
**c/o Cabinet Lavoix 2 Place d'Estienne d'Orves**
**F-75441 Paris Cedex 09 (FR)**

(54) **Cylindre de travail composite pour laminage à chaud de produits plats et procédé de laminage en comportant application.**

(57)   La présente invention est relative à un cylindre de travail composite pour cages finisseuses et dégrossisseuses d'un train à bandes à chaud dont la zone externe de travail est réalisée en un acier au chrome-vanadium, caractérisé en ce que l'acier au chrome-vanadium de la couche externe de travail contient de 1,3 à 2,2 en poids en carbone, de 8 à 16% en poids de chrome, de 5 à 7% de poids en vanadium, le reste étant constitué de fer et d'éléments habituellement présents.

EP 0 555 142 A1

La présente invention concerne les cylindres de travail bimétalliques ou composites destinés à équiper notamment les cages dégrossisseuses et les cages finisseuses d'un train de laminoir pour bandes à chaud.

Les modes d'usure des cylindres de travail à chaud sont multiples et dépendent essentiellement de la température du produit laminé et donc de la position du cylindre dans le train.

Le mécanisme d'incrustation bien connu (banding) qui a pour origine le bris et le déchaussement des carbures à la surface de travail des cylindres, se produit sur les dernières cages dégrossisseuses et sur les premières cages finisseuses.

Le frottement et le glissement entre le métal de la bande et le cylindre, qui est variable en fonction de l'emplacement le long de l'arc de contact et en fonction des conditions de laminage (pression, température), peut conduire à un cisaillement plastique superficiel qui, en présence d'une couche d'oxyde insuffisante et/ou insuffisamment tenace, se caractérise par un régime de travail en grippage continu.

Les manifestations négatives de ce régime de grippage continu sont la formation à la surface du cylindre d'un relief en forme de chevrons (appelé "fluage" par certains spécialistes) qui n'est autre qu'une forme limite de l'écoulement de l'oxyde et, au-delà, l'apparition d'un phénomène d'usure adhésive catastrophique : le collage.

L'un et l'autre, au même titre que le banding, sont dommageables pour le rendement du cylindre exprimé en tonnes par mm usé et se traduisent pour le produit laminé par des rebuts ou des déclassements.

Le brevet français n° 79 27 952 décrit déjà des solutions intéressantes qui se sont traduites par un développement industriel important sur de nombreux laminoirs à chaud, en améliorant considérablement la résistance au bris des carbures de la surface de travail et à la fatigue thermique, en ajustant la morphologie et la quantité des carbures $M_7C_3$ par un choix judicieux de la teneur en carbone et en chrome.

Cependant le carbure $M_7C_3$ construit sur l'élément chrome donne une matrice riche en chrome qui, en l'absence d'autre élément compensateur, conduit à une faible cinétique d'oxydation, notamment quand la température de bande diminue, ce qui est le cas dans les cages finisseuses.

Or, notamment lorsque la température diminue, la calamine du matériau laminé a une capacité de déformation plastique souvent insuffisante pour assurer une couverture unie de la tôle dans l'emprise (intervalle entre les cylindres), et des contacts métal-cylindre peuvent se produire là où le métal est à nu, si le cylindre n'est pas lui-même recouvert d'une couche d'oxyde. Le collage ou tout au moins un micro-collage devient alors inévitable.

Le brevet français 87 18 073 propose d'améliorer la cinétique d'oxydation en utilisant une teneur élevée en élément vanadium, pour permettre la formation de carbures VC ayant une excellente morphologie. Les cylindres réalisés suivant ce concept ont une résistance à l'usure extraordinaire dans les toutes dernières cages finisseuses. Ce même concept utilisé dans les premières cages finisseuses apparaît en revanche tout-à-fait insuffisant et les couches d'oxydes formées à la surface de ces cylindres, même dans des conditions thermiques favorables, sont trois à quatre fois plus minces que celles obtenues avec des cylindres en fonte à haute teneur en chrome.

De telles couches d'oxydes sont trop fragiles et s'écaillent facilement ce qui entraîne, comme précédemment, des risques de collage ou de micro-collage.

On connaît aussi d'après le document WO-91/19824 un cylindre composite dont la couche externe est réalisée en un acier comprenant 1,2 à 2,4% de carbone, 3 à 6% de vanadium et 10 à 20% d'au moins un élément choisi parmi le chrome, le molybdène et le tungstène. Ce document décrit des structures ayant deux types de carbures.

- le carbure de type MC dans lequel M est essentiellement le vanadium mais où l'on trouve aussi d'autres éléments carburigènes : W, Mo et éventuellement Cr, car un carbure formé dans un alliage n'est jamais pur;
- le carbure de type $M_6C$ dans lequel M est essentiellement le molybdène et le tungstène, mais on y trouve aussi, pour la même raison, un peu de chrome et de vanadium.

La présence de ces deux types de carbures s'explique par les teneurs élevées en Mo et W (10 à 12%) et par la teneur basse en Cr ( < 6%).

Or le carbure $M_6C$ est un carbure fragile ayant une cohésion faible avec la matrice; il n'est donc pas satisfaisant vis-à-vis de la fatigue thermique et donc dans les applications particulières envisagées ici.

En présence d'un tel état de la technique, l'objectif que se fixe l'invention est de fournir un cylindre de travail composite pour cage dégrossisseuse ou cage finisseuse d'un train à bandes à chaud, qui présente des caractéristiques et des performances améliorées dans les utilisations particulières envisagées, par une amélioration simultanée de la cinétique d'oxydation et de l'adhérence du film d'oxyde.

De plus, un cylindre selon l'invention devra pouvoir être réalisé en utilisant la technique de la coulée centrifuge.

A cet effet, l'invention a pour objet un cylindre de travail composite, notamment pour cage dégrossisseuse ou finisseuse d'un laminoir à bandes à chaud, ce cylindre comprenant un coeur en fonte ou en acier, une zone externe en acier au chrome-vanadium et une zone de liaison entre le coeur et la zone externe, caractérisé en ce que l'acier de la zone externe contient 1,3 à 2,2% en poids de carbone, 8 à 16% en poids de chrome et 4 à 7% en poids de vanadium, le reste étant constitué par du fer et d'autres éléments habituellement présents.

Suivant d'autres caractéristiques :
- les teneurs en chrome et en vanadium sont de préférence comprises entre 9 et 14% et entre 5 et 6,5%, respectivement;
- l'acier de la zone externe de travail contient en outre 3 à 5% de cobalt;
- le coeur du cylindre est en fonte nodulaire;
- le coeur du cylindre est en acier contenant 0,3 à 0,5% en poids de carbone.

L'invention a également pour objet un procédé de laminage à chaud de bandes métalliques et notamment de bandes d'acier dans un train de laminoir à bandes à chaud comportant plusieurs cages dont une au moins comprend au moins un cylindre de travail selon l'invention, caractérisé en ce que, Θ (en °C) étant la température de laminage au niveau d'une cage déterminée du train, on utilise dans cette cage au moins un cylindre dont la teneur en chrome de la matrice $Cr_m$ de la zone externe vérifie sensiblement la relation :

$$Cr_m = \frac{\Theta - 610}{40}$$

De plus, la teneur en chrome $Cr_m$ de la matrice vérifie sensiblement la relation suivante :

$$Cr_m = 1,631 \frac{Cr}{C} - 0,83$$

L'invention a également pour objet l'utilisation dans une cage dégrossisseuse ou une cage finisseuse d'un train à bandes à chaud, d'un cylindre tel que défini précédemment.

L'invention va être décrite plus en détail ci-dessous en se référant au dessin annexé, donné uniquement à titre d'exemple et sur lequel :

La Fig. 1 représente schématiquement une coupe micrographique illustrant la structure de la zone externe de travail d'un cylindre suivant l'invention; et

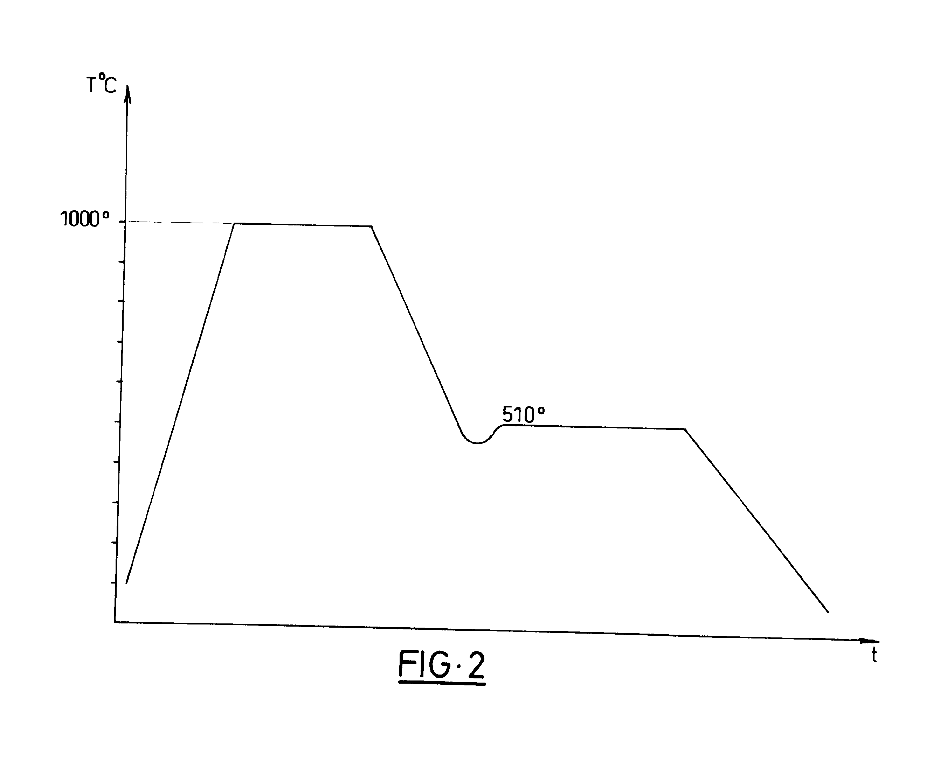

La Fig. 2 est un schéma illustrant un traitement thermique pouvant être appliqué à un tel cylindre.

En présence de l'état antérieur de la technique analysé précédemment, il apparaît que la couche d'oxyde formée par le matériau du cylindre en présence de vapeur d'eau et dans des conditions données de température est déterminante à l'égard du phénomène de collage.

Cette couche d'oxyde doit se former vite de façon à se renouveler au fur et à mesure de son usure due au frottement-glissement avec la calamine du produit laminé, mais elle doit aussi être très adhérente au support de façon à conserver malgré des conditions de laminage variables au cours d'un même montage une épaisseur toujours suffisante et éviter ainsi les chevrons de la couche limite.

A cet égard il est apparu au cours d'essais en laboratoire sur une machine de frottement à chaud que le meilleur coefficient de frottement, présentant de plus la meilleure stabilité, est obtenu avec des spinelles de chrome. Ce coefficient de frottement est d'ailleurs d'autant plus élevé que la quantité d'oxyde formé est importante et que la spinelle $(Cr_x Fe_y)_z O4$ contient plus de chrome.

Ceci est tout-à-fait en corrélation avec l'observation faite en pratique de la meilleure tenue au patinage des cylindres réalisés selon le brevet français n° 79 27 952 par rapport à ceux de la technique antérieure (cylindres forgés en acier adamite).

Toutes ces expériences ont conduit, selon l'invention, à combiner les éléments chrome et vanadium en optimisant l'un et l'autre des éléments pour améliorer simultanément la cinétique d'oxydation grâce à l'élément vanadium et l'adhérence du film d'oxyde grâce à l'élément chrome.

De façon à conserver la morphologie des carbures de chrome déjà obtenue par le brevet FR 79 27 952, la teneur en carbures $M_7C_3$ doit être comprise entre 3 et 15%, ce qui conduit à une teneur en carbone comprise entre 1,3 et 2,2% et une teneur en chrome comprise entre 8 et 16%.

Par ailleurs le brevet FR 87 18 073 met en évidence une limite technologique de l'utilisation de l'élément d'alliage vanadium, lors de l'utilisation de la coulée centrifuge qui reste la mieux adaptée et la plus économique pour la fabrication de cylindres bimétalliques.

Cette ligne dite ligne de "vanadium critique" définit, pour une teneur en carbone donnée une teneur en vanadium à ne pas dépasser sous peine de provoquer immédiatement une zone de décantation du carbure VC conduisant automatiquement à une zone de liaison tout à la fois poreuse et fragile entre le coeur du cylindre et son enveloppe.

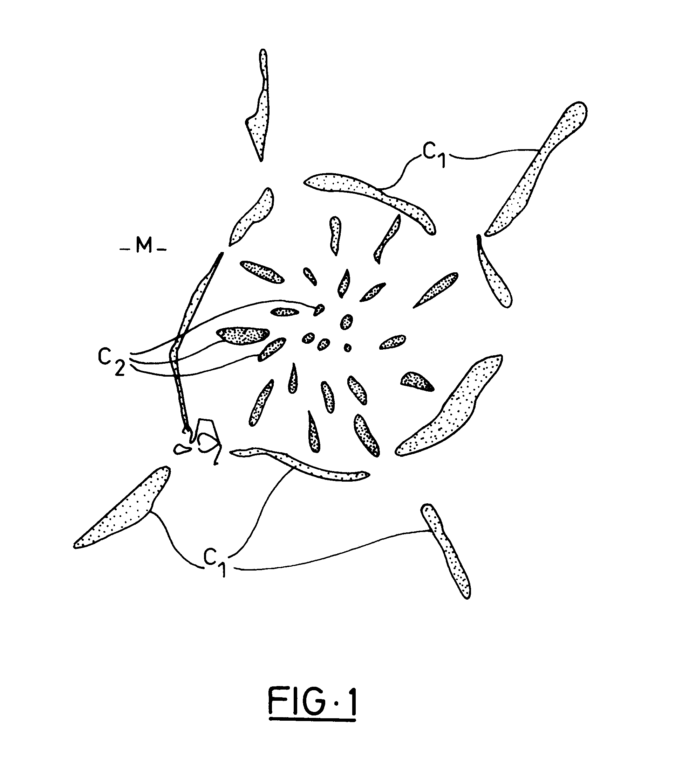

D'un autre côté le carbure VC de l'eutectique $\gamma$VC qui se forme bien avant l'eutectique $M_7C_3$ se retrouve en final sous la forme d'éléments allongés ou "d'aiguilles" disposés en position intragranulaire par rapport à l'eutectique $M_7C_3$, procurant ainsi entre les carbures $M_7C_3$ une structure en forme "d'oursin". Cette disposition est illustrée schématiquement sur la Fig. 1. Sur cette figure on a représenté, noyés dans la matrice M de l'acier constituant la zone externe du cylindre, des carbures $C_1$ de type $M_7C_3$ et des carbures $C_2$ de type VC. La variation de forme des carbures VC telle qu'elle apparaît sur ce schéma correspond à la structure en "oursin" mentionnée précédemment.

La teneur en vanadium du cylindre de l'invention est ainsi comprise entre 5 et 7% et variable suivant la teneur en carbone, cette teneur en vanadium étant d'autant plus faible que la teneur en carbone est plus élevée. Une telle teneur en vanadium permet l'utilisation d'un procédé de fabrication par coulée centrifuge.

Dans ces conditions les teneurs en carbure VC, mesurées au microscope électronique à balayage sont comprises entre 4 et 5% en volume.

Cet eutectique γVC s'est révélé en service d'une résistance à l'usure extrême sans doute tout à la fois en raison de la dureté du carbure VC (3 000 HV) et de ses propriétés tribologiques se manifestant par la formation instantanée d'oxyde de vanadium.

Par ailleurs, le chrome de la matrice, capable de générer la spinelle de chrome recherchée, a une teneur qui varie entre 6 et 13% environ, et lors de la cristallisation il se forme exclusivement deux eutectiques , celui du chrome et celui du vanadium, mais aucun carbure $M_3C$ que l'on cherche de toute façon à éviter.

Dans certains cas et notamment pour le laminage de l'acier inoxydable où l'on exige une très grande adhérence du film d'oxyde, celui-ci peut encore être amélioré en utilisant l'élément cobalt jusqu'à la teneur de 5%.

L'utilisation des autres éléments habituels tels que W, Nb, Ti, Zr, B, Mo en quantités variables est possible mais ne change pas fondamentalement les propriétés tribologiques recherchées et obtenues par l'invention. En tout état de cause la teneur globale en ces divers éléments d'alliage ne doit pas dépasser 10%.

Dans le cadre de l'invention, il est également possible de choisir de façon optimale la composition du métal d'enveloppe d'un cylindre de travail, en fonction de la position de ce cylindre dans le laminoir et en fonction de la température de laminage au niveau de la cage à laquelle appartient ce cylindre. On utilise un acier à teneur en carbone plus faible pour des cages dégrossisseuses, et un acier à teneur en carbone plus élevée pour les cages finisseuses. A titre indicatif, on choisira de préférence C = 1,3 à 1,5 pour les cages dégrossisseuses, C = 1,6 à 1,9 pour les premières cages finisseuses $F_1$-$F_4$ et C = 1,9 à 2,2 pour les dernières cages finisseuses $F_5$-$F_7$.

Le choix de la teneur en chrome permet une adaptation relativement précise en fonction de la position de la cage et des conditions de laminage qui y prévalent. En effet, lorsque la teneur en chrome dans la matrice varie entre 6 et 13%, la cinétique d'oxydation varie dans un rapport de 3 à 1.

Etant donné que la température de laminage peut être de l'ordre de 1 050 à 1 150° au niveau des cages dégrossisseuses, et que cette température est comprise entre environ 880 et environ 1 020° pour les premières cages finisseuses, pour atteindre environ 850° pour les dernières cages finisseuses, on déterminera la teneur en chrome de la zone externe du cylindre en fonction de la température de laminage Θ exprimée en °C, en utilisant les formules suivantes :

$$Cr_m = \frac{\Theta - 610}{40}$$

et

$$Cr_m = 1{,}631 \frac{Cr}{C} - 0{,}83$$

où $Cr_m$ est la teneur en chrome de la matrice, exprimée en pourcentage en poids, de l'acier constituant la zone externe du cylindre.

La seconde formule est connue pour les alliages à haut chrome et a été vérifiée expérimentalement pour les alliages Chrome-Vanadium visés dans ce brevet.

Les teneurs en carbone et en chrome ayant ainsi été fixées, on détermine la teneur en vanadium de façon à se trouver au voisinage de la ligne définie précédemment, dite de "vanadium critique" qui est sensiblement une droite et s'étend, dans un diagramme vanadium/carbone, entre les points C = 1, 3, V = 7 et C = 2,2, V = 5.

Grâce aux indications qui précèdent, on voit donc que l'on peut réaliser des cylindres de laminoir qui conviennent pour une utilisation dans chacune des cages d'un train à bandes à chaud, moyennant une adaptation convenable des teneurs en éléments C, Cr et V.

A titre d'exemple, des cylindres de ce type ayant la composition moyenne suivante ont été essayés avec succès dans les premières cages finisseuses d'un train à bandes à chaud :

| | |
|---|---|
| C | : 1,72 |
| Si | : 0,85 |
| Mn | : 0,78 |
| P | : 0,030 |
| S | : 0,014 |
| Ni | : 0,79 |
| Cr | : 9,25 |
| Mo | : 1,82 |
| V | : 6,3 |
| W | : 0,62 |

Ces cylindres comportaient un coeur réalisé soit en fonte nodulaire, soit en un acier contenant de 0,3 à 0,5% en poids de carbone.

Des cylindres selon l'invention utilisés dans des installations de laminage à chaud ont une dureté qui dépassent 80 SHC. Ces cylindres sont de préférence obtenus par centrifugation et subissent un traitement thermique qui est dans l'ensemble classique et qui comprend les opérations suivantes :

- tout d'abord un traitement d'austénitisation à une température comprise entre 950 et 1 050°C pendant une durée de l'ordre de 24 heures, cette température et cette durée dépendant du diamètre du cylindre;
- cette austénitisation est suivie d'un refroidissement à l'air soufflé pendant une durée de 3 heures environ pour atteindre une température de l'ordre de 450°C;
- puis le cylindre est maintenu à une température constante de l'ordre de 510°C environ, pendant une durée comprise entre 6 et 24 heures, suivant la dimension du cylindre;
- on effectue ensuite un refroidissement dans le four, jusqu'à la température ambiante.

Selon la teneur en austénite résiduelle, le cylindre subit ensuite de façon connue, deux ou trois revenus à une température comprise entre 450 et 500°C.

## Revendications

1. Cylindre de travail composite, notamment pour cage dégrossisseuse ou finisseuse d'un laminoir à bandes à chaud, comprenant un coeur en fonte ou en acier, une zone externe en acier au chrome-vanadium et une zone de liaison entre le coeur et la zone externe, caractérisé en ce que l'acier de la zone externe contient 1,3 à 2,2% en poids de carbone, 8 à 16% en poids de chrome et 4 à 7% en poids de vanadium, le reste étant constitué par du fer et d'autres éléments habituellement présents.

2. Cylindre selon la revendication 1, caractérisé en ce que dans la zone externe, la teneur en carbures $M_7C_3$ est comprise entre 3 et 15% et le carbure VC de l'eutectique $\gamma$VC se retrouve sous la forme d'éléments allongés ou d'aiguilles disposés en position intragranulaire par rapport aux carbures $M_7C_3$, procurant ainsi entre les carbures $M_7C_3$ une structure en forme d'oursin.

3. Cylindre suivant la revendication 1, caractérisé en ce que l'acier de la zone externe contient 9 à 14% de chrome et 5 à 6,5% de vanadium.

4. Cylindre suivant la revendication 1, caractérisé en ce que l'acier de la zone externe contient 3 à 5% en poids de cobalt.

5. Cylindre suivant l'une quelconque des revendications 1 à 4, caractérisé en ce que l'acier de la zone externe contient des éléments d'alliages choisis dans le groupe comprenant W, Nb, Ti, Zr, B, Mo, la teneur globale en ces éléments d'alliage étant inférieure à 10% en poids.

6. Cylindre suivant l'une quelconque des revendications 1 à 5, caractérisé en ce que la teneur en vanadium est d'autant plus faible que la teneur en carbone est élevée.

7. Cylindre suivant la revendication 6, caractérisé en ce que dans un diagramme C,V les points représentatifs de la teneur en ces deux éléments se situent sur ou au voisinage d'un segment de droite déterminé par les points C = 1,3, V = 7 et C = 2,2, V = 5.

8. Cylindre suivant l'une quelconque des revendications 1 à 7, caractérisé en ce que le coeur du cylindre est en fonte nodulaire.

9. Cylindre suivant l'une quelconque des revendications 1 à 7, caractérisé en ce que le coeur du cylindre est en acier contenant 0,3 à 0,5% en poids de carbone.

10. Cylindre selon l'une quelconque des revendications 1 à 9, caractérisé en ce qu'il est réalisé par coulée centrifuge.

11. Utilisation d'un cylindre suivant l'une quelconque des revendications 1 à 10, dans une cage dégrossisseuse ou finisseuse d'un train à bandes à chaud.

12. Procédé de laminage à chaud de bandes métalliques, dans un train de laminoir comprenant plusieurs cages dont au moins une comporte au moins un cylindre suivant l'une quelconque des revendications 1 à 10, caractérisé de plus en ce que $\Theta$ (en °C) étant la température de laminage au niveau d'une cage déterminée, on utilise dans cette cage au moins un cylindre de travail dont la teneur en chrome $Cr_m$ de la matrice (en pourcentage en poids) dans la zone externe vérifie sensiblement la relation :

$$Cr_m = \frac{\Theta - 610}{40}$$

13. Procédé suivant la revendication 12, caractérisée en ce que ladite teneur en chrome de la matrice vérifie sensiblement la relation :

$$Cr_m = 1,631\frac{Cr}{C} - 0,83$$

14. Procédé suivant l'une quelconque des revendications 12 et 13, caractérisé en ce qu'on choisit la teneur en carbone de la zone externe du cylindre de telle façon que cette teneur soit minimale dans une cage dégrossisseuse et augmente à partir des premières cages finisseuses, pour être maximale dans les dernières cages finisseuses.

15. Procédé suivant la revendication 14, caractérisé en ce que la teneur en carbone de la zone externe du cylindre est comprise entre 1,3 et 1,5 pour une cage dégrossisseuse, entre 1,6 et 1,9 pour les premières cages finisseuses et entre 1,9 et 2,2 pour les dernières cages finisseuses.

FIG·1

FIG·2

EP 0 555 142 A1

**Office européen des brevets**

# RAPPORT DE RECHERCHE EUROPEENNE

Numero de la demande

EP  93 40 0259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 464 780 (KUBOTA CORPORATION)<br><br>*Revendications 1, 2, 5, 7-10*<br>--- | 1,4,5,8,10 | B32B15/01<br>C22C38/24 |
| X | DE-A-4 106 420 (HITACHI METALS LTD.)<br>*Revendications 1, 3, 5, 6, 9; page 5, Tabelle 1, Probe Nr.4*<br>--- | 1,4,5 | |
| A | EP-A-0 430 241 (HITACHI METALS LTD.)<br>*Revendications 1-4, 8*<br>--- | 1,4,5,8 | |
| A | WO-A-9 100 371 (BROKEN HILL PROPRIETARY COMPANY LTD.)<br>*Revendications 1-4, 7, 8, 11*<br>--- | 1,4,5 | |
| A | EP-A-0 309 587 (HITACHI METALS LTD.)<br>*Revendications 1-8*<br>--- | 1,3-5 | |
| A | DE-A-3 116 227 (KUBOTA LTD.)<br>*Revendications 1, 2, 7-10*<br>--- | 1,3,5 | |
| A,D | WO-A-9 119 824 (NIPPON STEEL CORPORATION)<br>*Abrégé*<br>--- | 1-15 | **DOMAINES TECHNIQUES RECHERCHES (Int. Cl.5)**<br><br>B32B<br>C22C |
| A,D | EP-A-0 322 315 (CHAVANNE KETIN)<br>* le document en entier *<br><br>----- | 1,6,7 | |

Le présent rapport a été établi pour toutes les revendications

| Lieu de la recherche | Date d'achèvement de la recherche | Examinateur |
|---|---|---|
| LA HAYE | 12 MAI 1993 | LIPPENS |